# EUROPÄISCHE PATENTANMELDUNG

(11) **EP 2 837 837 A1**
(43) Veröffentlichungstag der Anmeldung: **18.02.2015**
(21) Anmeldenummer: 13004045.4
(22) Anmeldetag: 14.08.2013
(51) Int. Cl.: F16C 23/04, F16C 33/04, F16C 29/02, F16C 17/02

(54) **Führungsring und dessen Verwendung**

(71) Anmelder: Carl Freudenberg KG, 69469 Weinheim (DE)
(72) Erfinder: Barillas, Gonzalo, 36304 Alsfeld-Altenburg (DE); Freitag, Edgar, 34613 Schwalmstadt (DE); Siegrist, Uwe, 34633 Ottrau (DE)

(57) **Zusammenfassung**

Führungsring, umfassend eine Tragfläche (3a), eine erste Stirnseite (1), eine zweite Stirnseite (2) und eine Führungsfläche (3), die sich zwischen den beiden Stirnseiten (1, 2) erstreckt. Zumindest eine der Stirnseiten (1, 2) ist in Form einer Kurve (4, 5) asymptotisch übergehend in die Tragfläche (3a) und/oder die Führungsfläche (3) ausgebildet.

## Beschreibung

### Beschreibung

Die Erfindung betrifft einen Führungsring, umfassend eine Tragfläche, eine erste Stirnseite, eine zweite Stirnseite und eine Führungsfläche, die sich zwischen den beiden Stirnseiten erstreckt.

### Stand der Technik

Ein solcher Führungsring ist allgemein bekannt und hohlzylinderförmig ausgebildet, wobei sich die beiden Stirnseiten in radialer Richtung erstrecken und durch die sich jeweils in axialer Richtung erstreckende Tragfläche und Führungsfläche miteinander verbunden sind. Die Tragfläche und die Führungsfläche sind einander in radialer Richtung gegenüberliegend angeordnet.

Im Längsschnitt betrachtet, ist die Führungsfläche eben ausgebildet, wobei der Übergang zwischen den beiden Stirnseiten und der Tragfläche und/oder der Führungsfläche jeweils rechtwinklig oder mit einem relativ kleinen Radius oder einer Fase versehen ist.

Bezüglich der Dauerhaltbarkeit des Führungsrings oder des Maschinenelements, das durch den Führungsring geführt wird, haben sich die rechtwinkligen Übergänge zwischen den Stirnseiten und der Führungsfläche als nachteilig erwiesen. Während der bestimmungsgemäßen Verwendung des Führungsrings entstehen im Bereich der Übergänge unerwünscht hohe Spannungen in den Kontaktzonen zwischen den Stirnseiten des Führungsrings und dem Maschinenelement, das durch den Führungsring geführt wird. Diese unerwünscht hohen Spannungen führen zu einem vorzeitigen Verschleiß am Führungsring und/oder an der Oberfläche des Maschinenelements, das durch den Führungsring geführt wird. Diese Spannungserhöhung kann auch auf der Tragfläche vorkommen.

Der Erfindung liegt die Aufgabe zugrunde, einen Führungsring der eingangs genannten Art derart weiterzuentwickeln, dass unerwünscht hohe Spannungen zwischen dem Führungsring und dem Maschinenelement, das durch den Führungsring geführt wird, zuverlässig vermieden werden. Die Spannungsverteilung auf den Oberflächen der einander berührenden Teile soll vergleichmäßigt sein. Durch die Vergleichmäßigung der Spannungen soll die Dauerhaltbarkeit des Führungsrings und des Maschinenelements, dass durch den Führungsring geführt wird, erhöht werden und es sollen gleichmäßig gute Gebrauchseigenschaften während einer langen Gebrauchsdauer erzielt werden.

Durch die Vergleichmäßigung der Spannungen wird auch im Betrieb die hydrodynamische Schmierung der Gleitfläche stark begünstigt, was sich positiv auf das tribologische Verhalten des Führungsrings auswirkt.

Diese Aufgabe wird erfindungsgemäß mit den Merkmalen von Anspruch 1 gelöst. Auf vorteilhafte Ausgestaltungen nehmen die auf Anspruch 1 rückbezogenen Ansprüche Bezug.

Zur Lösung der Aufgabe ist es vorgesehen, dass zumindest eine der Stirnseiten in Form einer Kurve asymptotisch übergehend in die Tragfläche und/oder die Führungsfläche ausgebildet ist.

Gemäß einer vorteilhaften Ausgestaltung kann es vorgesehen sein, dass beide Stirnseiten jeweils in Form einer Kurve asymptotisch übergehend in die Tragfläche und/oder die Führungsfläche ausgebildet sind.

Bei einer derartigen Ausgestaltung des Übergangs zwischen den Stirnseiten des Führungsrings und dessen Tragfläche und/oder Führungsfläche ist von Vorteil, dass in diesen üblicherweise kritischen Bereichen während der bestimmungsgemäßen Verwendung des Führungsrings, wenn also ein Maschinenelement durch den Führungsring geführt wird, unerwünscht hohe Spannungen vermieden werden. Gebrauchsdauerverringernde Spannungsspitzen in diesen Bereichen werden durch eine solche Ausgestaltung auf ein Minimum reduziert, ebenso wie der Verschleiß am Führungsring und/oder am Maschinenelement, das durch den Führungsring geführt wird.

Der erfindungsgemäße Führungsring selbst weist gleichbleibend gute Gebrauchseigenschaften während einer langen Gebrauchsdauer auf und auch am Maschinenelement, das durch den Führungsring geführt wird, sind Beschädigungen der Oberfläche des Maschinenelements praktisch ausgeschlossen.

Der jeweils asymptotische Kurvenverlauf von den Stirnseiten des Führungsrings in die Tragfläche und/oder die Führungsfläche ist hinsichtlich einer Vergleichsmäßigung der Spannungsverteilung von Vorteil, auch vorteilhafter, als wenn dieser Übergang zum Beispiel viertelkreisförmig oder durch eine Fase ausgeführt wäre. Durch den asymptotischen Übergang sind die Spannungen zwischen den Oberflächen der einander berührenden Teile, also des Führungsrings und des Maschinenelements, das durch den Führungsring geführt wird, bestmöglich vergleichmäßigt.

Dieser Kurvenverlauf ermöglicht eine gute und effektive Schmierung der Gleitstelle, also eine gute hydrodynamische Schmierung.

Die Herstellung eines Führungsrings, dessen beide Stirnseiten jeweils in Form einer Kurve asymptotisch übergehend in die Tragfläche und/oder die Führungsfläche ausgebildet sind und der zu einer gedachten Radialebene axial mittig des Führungsrings symmetrisch ausgebildet ist, ist besonders einfach. Außerdem ist von Vorteil, dass die Gefahr von Fehlern bei der Montage des Führungsrings auf ein Minimum reduziert ist. Durch die zuvor beschriebene Symmetrie des Führungsrings ist dessen lagerichtige Montage besonders einfach möglich.

Gemäß einer vorteilhaften Ausgestaltung kann es vorgesehen sein, dass die Kurven nach der Funktion y = arc tan(x) verläuft. Durch eine solche Funktion wird der asymptotische Übergang von den Stirnseiten in die Tragfläche und/oder die Führungsfläche gut abgebildet.

Durch den asymptotischen Übergang der Kurven, ausgehend von jeder Stirnseite in die Tragfläche und/oder die Führungsfläche, sind die Tragfläche und/oder die Führungsfläche zwischen den Stirnseiten im Wesentlichen ballig ausgebildet.

Geführt wird das vom Führungsring zu führende Bauteil praktisch nur axial außerhalb des Übergangsbereichs von den Stirnseiten in die Tragfläche und/oder die Führungsfläche. Spannungsspitzen und damit Verschleiß in den genannten Übergangsbereichen werden dadurch vermieden.

In Abhängigkeit von den jeweiligen Gegebenheiten des Anwendungsfalles kann die Tragfläche oder die Führungsfläche jeweils radial innen oder radial außen angeordnet sein.

Ist die Führungsfläche radial innen angeordnet, ist der Führungsring als Stangenführung ausgebildet und zum Beispiel in einem die Stange umgebenden Gehäuse angeordnet. Die Stange ist relativ zum Führungsring in translatorischer Richtung hin und her beweglich.

Ist die Führungsfläche demgegenüber radial außen angeordnet, ist der Führungsring als Kolbenführung ausgebildet und im Außenumfang des Kolbens angeordnet. Die Führungsfläche des Führungsrings ist in einem solchen Fall translatorisch relativ hin und her beweglich an einer eine Bohrung begrenzenden Wandung eines Gehäuses abgestützt.

Der Führungsring kann aus einem polymeren Werkstoff bestehen. Ein solcher Führungsring ist einfach und kostengünstig herstellbar und weist nur ein geringes Gewicht auf. Als polymere Werkstoffe können zum Beispiel PTFE-Werkstoffe zur Anwendung gelangen, die besonders gute Gleiteigenschaften haben.

Ein solcher Führungsring kann einstückig und materialeinheitlich ausgebildet sein.

Der Führungsring kann aus einem Verbundwerkstoff bestehen, zum Beispiel aus einem polymeren Werkstoff, der durch ein Gewebe armiert ist.

Nach einer anderen Ausgestaltung kann es vorgesehen sein, dass der Führungsring aus einem metallischen Werkstoff besteht und dass die Führungsfläche von einer reibungsverringernden Oberflächenbeschichtung überdeckt ist.

Eine solche reibungsverringernde Oberflächenbeschichtung kann beispielsweise durch einen Gleitlack gebildet sein.

Zur einfachen Montage kann der Führungsring am Umfang eine Durchtrennung aufweisen. Dadurch besteht die Möglichkeit, dass der Umfang aufgeweitet und/oder verkleinert werden kann. Die Durchtrennung kann zum Beispiel durch einen Stufenschnitt, einen Winkelschnitt oder einen Schnitt parallel zur Hauptachse ausgebildet sein.

Einen Stufenschnitt wird man bevorzugt dann vorsehen, wenn am Umfang des Führungsrings immer eine tragende Fläche vorhanden sein muss.

Dabei ist von Vorteil, dass die Tragflächen durch die Überlappung des Stufenschnitts immer und unabhängig von der Umfangslage Lasten aufnehmen können. Die hydrodynamische Schmierfilmbildung ist optimal.

Einen Winkelschnitt wird man bevorzugt dann vorsehen, wenn eine möglichst große, tragende Fläche am Umfang des Führungsrings gewünscht wird.

Dabei ist von Vorteil, dass der Winkelschnitt einfach herzustellen ist.

Einen Schnitt parallel zur Hauptachse wird man bevorzugt dann vorsehen, wenn die tragende Fläche am Umfang des Führungsrings unterbrochen sein darf, wenn keine allzu hohen Lasten aufgebracht werden.

Dabei ist von Vorteil, dass dieser Schnitt besonders einfach herzustellen ist.

Wie zuvor bereits beschrieben, kann der Führungsring als Stangen- oder Kolbenführung verwendet werden.

### Kurzbeschreibung der Zeichnungen

Zwei Ausführungsbeispiele des erfindungsgemäßen Führungsrings werden nachfolgend anhand der Figuren 1 bis 4 näher erläutert.

Die Figuren 1 bis 4 zeigen jeweils in schematischer Darstellung:
- Figur 1: einen Zylinder mit einer Führung am Kolben und an der Kolbenstange,
- Figur 2: einen vergrößerten Ausschnitt aus Figur 1 im Bereich des Führungsrings an der Kolbenstange,
- Figur 3: eine weiter vergrößerte Darstellung des Führungsrings aus Figur 2 im Bereich des Übergangs von einer der Stirnseiten zur Führungsfläche,
- Figur 4: ein zweites Ausführungsbeispiel, bei dem der Führungsring als Kolbenführung ausgebildet ist.

### Ausführung der Erfindung

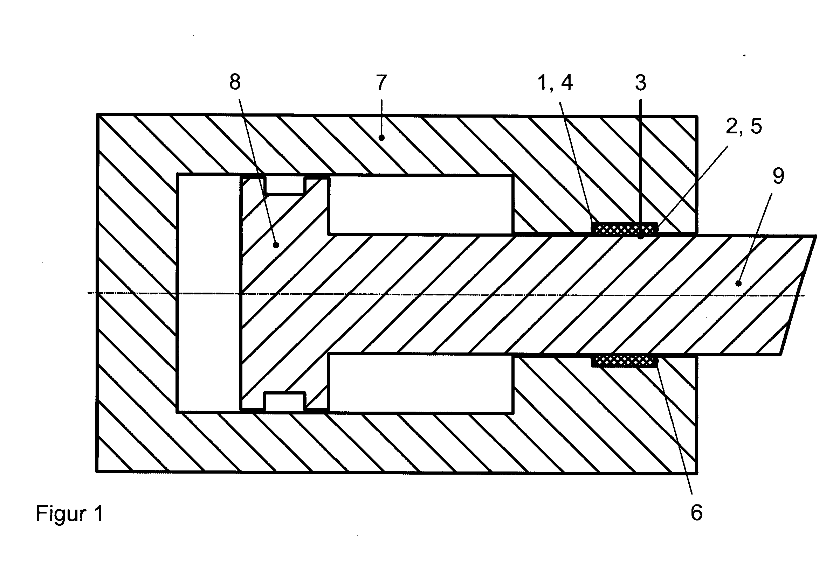

In den Figuren 1 bis 3 ist ein erstes Ausführungsbeispiel eines Zylinders gezeigt.

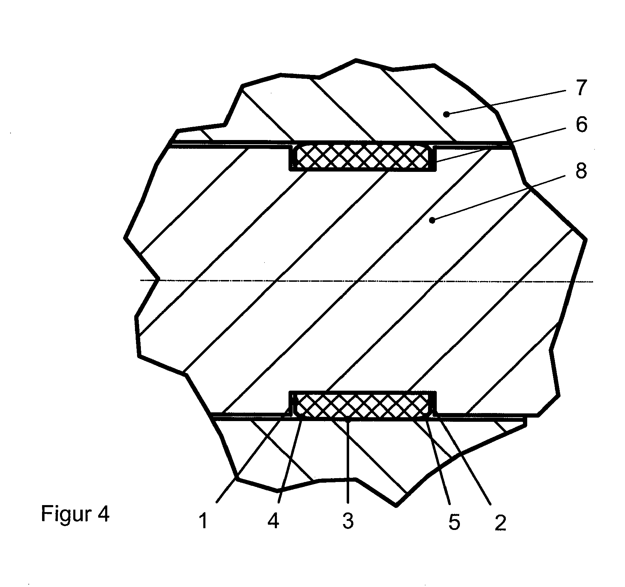

In Figur 1 wird der Führungsring als Stangenführung eines Zylinders verwendet. Der Führungsring ist in diesem Ausführungsbeispiel, genau wie im Ausführungsbeispiel gemäß Figur 4, hohlzylinderförmig ausgebildet.

Der Führungsring ist in einer radial nach innen offenen Nut (6) eines Gehäuses (7) angeordnet, das den Kolben (8) außenumfangsseitig beziehungsweise die Stange innen umschließt.

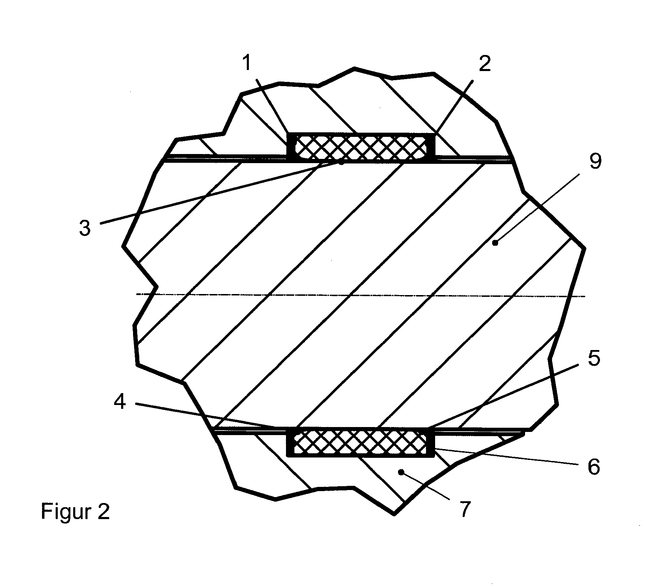

In Figur 2 ist ein Ausschnitt aus Figur 1 im Bereich der Stangenführung in vergrößerter Darstellung gezeigt. Der Führungsring besteht in beiden hier gezeigten Ausführungsbeispielen aus einem polymeren Werkstoff und ist einstückig und materialeinheitlich ausgebildet.

Alternativ kann der Führungsring aus einem Verbundwerkstoff oder einem metallischen Werkstoff bestehen. Die Führungsfläche 3 kann zum Beispiel mit einer reibungsverringernden Oberflächenbeschichtung versehen sein.

Der Führungsriege ist am Umfang mit einer Durchtrennung versehen, so dass dieser durch eine tangentiale Bewegung einfach montiert werden kann.

Der Führungsring weist axial beiderseits jeweils eine Stirnseite (1, 2) auf, wobei sich in axialer Richtung zwischen den beiden Stirnseiten (1, 2) die Führungsfläche (3) erstreckt. Jede der beiden Stirnseiten (1, 2) geht in Form einer Kurve (4, 5) asymptotisch in die Führungsfläche (3) über, so dass die Führungsfläche (3) zwischen den beiden Stirnseiten (1, 2) im Wesentlichen ballig ausgebildet ist.

Die Führungsfläche (3) Ist radial innen im Führungsring angeordnet und berührt die translatorisch in axialer Richtung hin und her bewegliche Stange (9) anliegend.

Der Übergangsbereich von den beiden Stirnseiten (1, 2) in die Führungsfläche (3) ist so ausgeführt, dass sich die Kontaktspannungen stetig und gleichförmig ausbreiten und eine unerwünscht hohe Spannungskonzentration in diesen Bereichen vermieden wird.

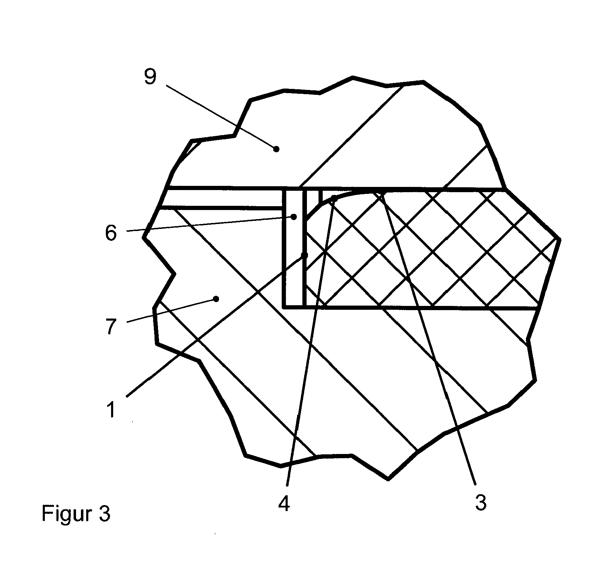

In Figur 3 ist einer der Übergangsbereiche des Führungsrings aus Figur 2 in weiter vergrößerter Darstellung gezeigt. Es ist zu erkennen, dass die Stirnseite (1) in Form der Kurve (4) asymptotisch übergehend in die Führungsfläche (3) ausgebildet ist. Der Führungsring ist symmetrisch zu einer gedachten Radialebene 10 ausgebildet.

In Figur 4 ist ein zweites Ausführungsbeispiel gezeigt, bei dem der Führungsring, abweichend vom Ausführungsbeispiel gemäß Figur 1, als Kolbenführung verwendet wird. Die Führungsfläche 3 des Führungsrings ist in diesem Fall radial außen angeordnet, wobei der Führungsring in einer Nut 6 des Kolbens 8 angeordnet ist und sich mit seiner Führungsfläche 3 an der Innenwand des Gehäuses 7 abstützt.

Nicht dargestellt, aber prinzipiell möglich ist zusätzlich oder alternativ ein wie zuvor beschriebener, asymptotischer Übergang auch von den Stirnseiten 1, 2 in die Tragfläche 3a.

## Patentansprüche

1. Führungsring, umfassend eine Tragfläche (3a), eine erste Stirnseite (1), eine zweite Stirnseite (2) und eine Führungsfläche (3), die sich zwischen den beiden Stirnseiten (1, 2) erstreckt, **dadurch gekennzeichnet, dass** zumindest eine der Stirnseiten (1, 2) in Form einer Kurve (4, 5) asymptotisch übergehend in die Tragfläche (3 a) und/oder die Führungsfläche (3) ausgebildet ist.

2. Führungsring nach Anspruch 1, **dadurch gekennzeichnet, dass** beide Stirnseiten (1, 2) jeweils in Form einer Kurve (4, 5) asymptotisch übergehend in die Tragfläche (3 a) und/oder die Führungsfläche (3) ausgebildet sind.

3. Führungsring nach einem der Ansprüche 1 oder 2, **dadurch gekennzeichnet, dass** die Kurven (4, 5) jeweils nach der Funktion y = arc tan(x) verlaufen.

4. Führungsring nach einem der Ansprüche 1 bis 3, **dadurch gekennzeichnet, dass** die Tragfläche (3 a) und/oder die Führungsfläche (3) zwischen den Stirnseiten (1, 2) im Wesentlichen ballig ausgebildet ist.

5. Führungsring nach einem der Ansprüche 1 bis 4, **dadurch gekennzeichnet, dass** die Tragfläche (3 a) oder die Führungsfläche (3) radial innen angeordnet ist.

6. Führungsring nach einem der Ansprüche 1 bis 4, **dadurch gekennzeichnet, dass** die Tragfläche (3 a) oder die Führungsfläche (3) radial außen angeordnet ist.

7. Führungsring nach einem der Ansprüche 1 bis 6, **dadurch gekennzeichnet, dass** er aus einem polymeren Werkstoff besteht.

8. Führungsring nach einem der Ansprüche 1 bis 7, **dadurch gekennzeichnet, dass** er einstückig und materialeinheitlich ausgebildet ist.

9. Führungsring nach einem der Ansprüche 1 bis 6, **dadurch gekennzeichnet, dass** er aus einem Verbundwerkstoff besteht.

10. Führungsring nach einem der Ansprüche 1 bis 6, **dadurch gekennzeichnet, dass** er aus einem metallischen Werkstoff besteht und dass die Führungsfläche (3) von einer reibungsverringernden Oberflächenbeschichtung überdeckt ist.

11. Führungsring nach einem der Ansprüche 1 bis 10, **dadurch gekennzeichnet, dass** er an einer Unfallstelle eine Durchtrennung aufweist.

12. Verwendung eines Führungsrings nach einem der Ansprüche 1 bis 11, als Stangen- oder Kolbenführung.
